# EUROPEAN PATENT SPECIFICATION

(11) **EP 4 523 955 B1**
(45) Date of publication and mention of the grant of the patent: **18.11.2026**
(21) Application number: 23902293.2
(22) Date of filing: 25.10.2023
(51) Int. Cl.: B60W 20/00, B60W 40/12

(54) **METHOD AND APPARATUS FOR DETERMINING AVAILABLE RANGE, AND HYBRID ELECTRIC VEHICLE AND STORAGE MEDIUM**
VERFAHREN UND VORRICHTUNG ZUR BESTIMMUNG DER VERFÜGBAREN REICHWEITER SOWIE ELEKTRISCHES HYBRIDFAHRZEUG UND SPEICHERMEDIUM
PROCÉDÉ ET APPAREIL DE DÉTERMINATION DE L'AUTONOMIE DISPONIBLE, ET VÉHICULE ÉLECTRIQUE HYBRIDE ET SUPPORT DE STOCKAGE

(30) Priority: 13.12.2022 CN 202211604270
(43) Date of publication of application: 19.03.2025
(73) Proprietor: Chery Automobile Co., Ltd., Wuhu, Anhui 241006 (CN)
(72) Inventor: SU, Wanqiang, Wuhu, Anhui 241006 (CN); ZHOU, Chongguang, Wuhu, Anhui 241006 (CN)
(74) Representative: Yang, Shu
(86) International application number: PCT/CN2023/126361
(87) International publication number: WO 2024/125093

(56) References cited:
- WO-A1-2013/026973
- CN-A- 105 128 853
- CN-A- 110 549 906
- CN-A- 113 060 121
- CN-A- 114 083 990
- CN-A- 114 763 079
- CN-A- 115 817 276
- JP-A- 2004 063 205
- JP-A- 2017 154 619
- US-A1- 2012 116 620

## Description

### TECHNICAL FIELD

The present disclosure relates to the field of vehicle technologies, and in particular, relates to a method and apparatus for determining an available range, a hybrid electric vehicle, and a storage medium.

### BACKGROUND

With the rapid development of vehicle technologies, hybrid electric vehicles have become essential in the vehicle field. Generally, the hybrid electric vehicle is equipped with both an electric motor and an engine, and at least one of the electric motor or the engine supplies power to the hybrid electric vehicle. US20120116620A1 discloses a plug-in hybrid electric vehicle and method of control for providing distance to empty and equivalent trip fuel economy information. JP2017154619A discloses a control device for hybrid vehicle. CN105128853A discloses a system used for calculating driving mileage of extended-range hybrid power automobile. CN113060121A discloses a hybrid electric vehicle driving range calculation method and hybrid electric vehicle.

### SUMMARY

Embodiments of the present invention provide a method and an apparatus for determining an available range, a hybrid electric vehicle, and a storage medium. The technical solutions of the embodiments of the present disclosure are as follows.

**In** some embodiments of the present disclosure, a method for determining an available range, applicable to a hybrid electric vehicle, is provided in accordance with claim 1. The method includes:
acquiring a residual fuel amount in the hybrid electric vehicle, and a first fuel consumption amount per unit distance and a first electricity consumption amount per unit distance;
determining a product of the first electricity consumption amount and a conversion ratio as a first equivalent consumption amount, wherein the conversion ratio is a ratio of a fuel consumption amount to an electricity consumption amount per unit distance in a history driving process of the hybrid electric vehicle, and the first equivalent consumption amount refers to a fuel consumption amount converted from the first electricity consumption amount; and
determining the available range of the residual fuel amount in the hybrid electric vehicle based on the residual fuel amount, the first fuel consumption amount, and the first equivalent consumption amount; wherein determining the available range of the residual fuel amount in the hybrid electric vehicle based on the residual fuel amount, the first fuel consumption amount, and the first equivalent consumption amount comprises: determining a sum of the first fuel consumption amount and the first equivalent consumption amount as an average fuel consumption amount per unit distance; acquiring a ratio of the residual fuel amount to the average fuel consumption amount, wherein the ratio indicates an amount of unit distances corresponding to the residual fuel amount; and determining a product of the ratio and the unit distance as the available range of the residual fuel amount; characterized in that the method further comprises: determining a ratio of the residual fuel amount to a first consumption amount threshold as the available range of the residual fuel amount in a case that the average fuel consumption amount is less than the first consumption amount threshold; or determining a ratio of the residual fuel amount to a second consumption amount threshold as the available range of the residual fuel amount in a case that the average fuel consumption amount is greater than the second consumption amount threshold; wherein the first consumption amount threshold is less than second consumption amount threshold.

In some embodiments, the method further comprises acquiring a second electricity consumption amount per unit distance in a case that the hybrid electric vehicle is driven by electric energy and a second fuel consumption amount per unit distance in a case that the hybrid electric vehicle is driven by fuel; and
determining a ratio of the second fuel consumption amount to the second electricity consumption amount as the conversion ratio.

In some embodiments, a process of determining the ratio of the second fuel consumption amount to the second electricity consumption amount as the conversion ratio is performed each predetermined time interval, and
acquiring the second electricity consumption amount in the case that the hybrid electric vehicle is driven by electric energy and the second fuel consumption amount in the case that the hybrid electric vehicle is driven by fuel comprises acquiring the second electricity consumption amount in the case that the hybrid electric vehicle is driven by electric energy and the second fuel consumption amount in the case that the hybrid electric vehicle is driven by fuel each predetermined time interval.

In some embodiments, the method further comprises acquiring a third electricity consumption amount and a third fuel consumption amount consumed by a target distance of the hybrid electric vehicle, wherein the third electricity consumption amount is an electricity amount consumed in the case that the hybrid electric vehicle is driven by electric energy, and the third fuel consumption amount is a fuel amount consumed in the case that the hybrid electric vehicle is driven by fuel; and
acquiring an adjusted conversion ratio by adjusting the conversion ratio based on a ratio of the third fuel consumption amount to the third electricity consumption amount and the conversion ratio.

In some embodiments, acquiring the adjusted conversion ratio by adjusting the conversion ratio based on the ratio of the third fuel consumption amount to the third electricity consumption amount and the conversion ratio comprises:
acquiring the adjusted conversion ratio by increasing the conversion ratio by a first ratio in a case that the ratio of the third fuel consumption amount to the third electricity consumption amount is greater than the conversion ratio;
determining a product of the conversion ratio and a second ratio as the adjusted conversion ratio in a case that the ratio of the third fuel consumption amount to the third electricity consumption amount is greater than the conversion ratio;
acquiring the adjusted conversion ratio by reducing the conversion ratio by a third ratio in a case that the ratio of the third fuel consumption amount to the third electricity consumption amount is less than the conversion ratio; or
determining a product of the conversion ratio and a fourth ratio as the adjusted conversion ratio in a case that the ratio of the third fuel consumption amount to the third electricity consumption amount is less than the conversion ratio.

In some embodiments, in a case that the first electricity consumption amount is negative, a fourth fuel consumption amount in the first fuel consumption amount is converted to the first electricity consumption amount, wherein the fourth fuel consumption amount is less than the first fuel consumption amount; or
in a case that the first electricity consumption amount is positive, the first electricity consumption amount is used to drive the hybrid electric vehicle.

In some embodiments of the present invention, an apparatus for determining an available range is provided in accordance with claim 7. The apparatus includes:
an acquiring module, configured to acquire a residual fuel amount in a hybrid electric vehicle, and a first fuel consumption amount per unit distance and a first electricity consumption amount per unit distance;
a determining module, configured to determine a product of the first electricity consumption amount and a conversion ratio as a first equivalent consumption amount, wherein the conversion ratio is a ratio of a fuel consumption amount to an electricity consumption amount per unit distance in a history driving process of the hybrid electric vehicle, and the first equivalent consumption amount refers to a fuel consumption amount converted from the first electricity consumption amount; and
the determining module, further configured to determine the available range of the residual fuel amount in the hybrid electric vehicle based on the residual fuel amount, the first fuel consumption amount, and the first equivalent consumption amount, the determining module further configured to: determine a sum of the first fuel consumption amount and the first equivalent consumption amount as an average fuel consumption amount per unit distance; acquire a ratio of the residual fuel amount to the average fuel consumption amount, wherein the ratio indicates an amount of unit distances corresponding to the residual fuel amount; and determine a product of the ratio and the unit distance as the available range of the residual fuel amount; characterized in that the determining module is further configured to: determine a ratio of the residual fuel amount to a first consumption amount threshold as the available range of the residual fuel amount in a case that the average fuel consumption amount is less than the first consumption amount threshold; or determine a ratio of the residual fuel amount to a second consumption amount threshold as the available range of the residual fuel amount in a case that the average fuel consumption amount is greater than the second consumption amount threshold; wherein the first consumption amount threshold is less than second consumption amount threshold.

In some embodiments of the present invention, a hybrid electric vehicle is provided in accordance with claim 8. The hybrid electric vehicle includes a processor and a memory storing one or more program codes, wherein the processor, when loading and running the one or more program codes, is caused to perform the method for determining the available range according to any above embodiment.

In some embodiments of the present invention, a computer-readable storage medium is provided in accordance with claim 9. The computer-readable storage medium stores one or more program codes, wherein the one or more program codes, when loaded and run by a processor, cause the processor to perform the method for determining the available range according to any above embodiment.

It should be understood that the above description and the following description are only exemplary, and do not limit the present disclosure.

### BRIEF DESCRIPTION OF DRAWINGS

FIG. 1 is a flowchart of a method for determining an available range according to some embodiments of the present disclosure;
FIG. 2 is a flowchart of a method for determining an available range according to some embodiments of the present disclosure;
FIG. 3 is a schematic structural diagram of an apparatus for determining an available range according to some embodiments of the present disclosure;
FIG. 4 is a schematic structural diagram of an apparatus for determining an available range according to some embodiments of the present disclosure; and
FIG. 5 is a structural block diagram of a hybrid electric vehicle according to some embodiments of the present disclosure.

### DETAILED DESCRIPTION

To make the objectives, technical solutions, and advantages of the present disclosure clearer, the embodiments of the present disclosure are further described hereinafter.

The terms "first," "second," "third," "fourth," and the like in the description, claims, and accompanying drawings in the present disclosure are only used distinguish different objects, but not used to describe a specific sequence. In addition, the terms "include," "comprise," and derivatives thereof are intended to cover non-exclusive inclusion. For example, a process, a method, a system, a product or a device including a series of steps or units is not limited to those listed steps or units, but may include steps or units that are not listed or inherent to the process, the method, the system, the product or the device.

It should be noted that information (including, but not limited to information of the user device, personal information of the user, and the like), data (including, but not limited to data for analysis, stored data, displayed data, and the like), and signals involved in the present disclosure are authorized by the user or fully authorized by all parties, and collection, usage, and processing of the related data are subject to the relevant laws, regulations, and standards of the relevant countries and regions.

The electric motor is powered by a battery and the engine is powered by fuel, and capacities of the battery and the engine affect each other, and thus it is urgent to provide a solution to determining residual fuel to determine an available range of the hybrid electric vehicle.

In some embodiments, the method for determining the available range is applicable to the hybrid electric vehicle. The hybrid electric vehicle is any device driven by electric energy and fuel. The fuel includes gasoline, diesel or other types of fuel.

In some embodiments, the hybrid electric vehicle is a car, a truck, a bus, other types of vehicles, or the like.

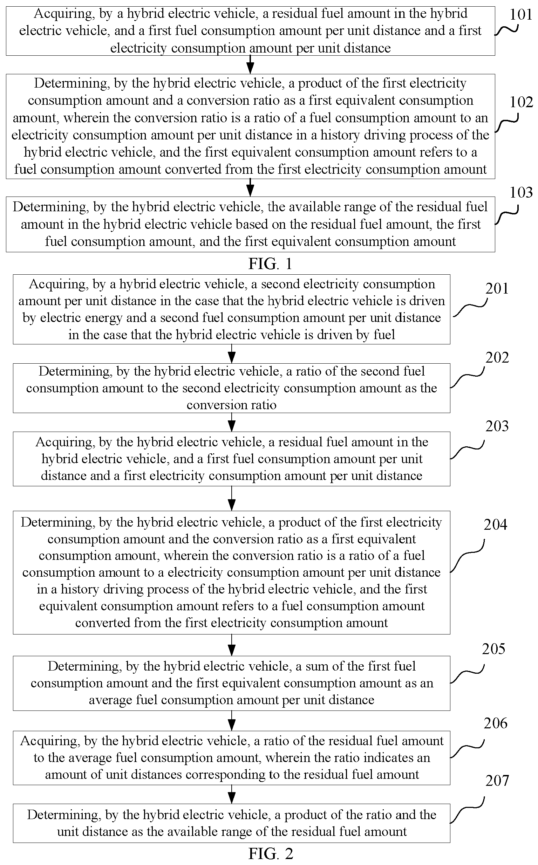

FIG. 1 is a flowchart of a method for determining an available range according to some embodiments of the present disclosure. Referring to FIG. 1, the method is applicable to the hybrid electric vehicle. Specifically, the method is applicable to an in-vehicle control computer of the hybrid electric vehicle. The method includes the following processes.

In S101, a hybrid electric vehicle acquires a residual fuel amount in the hybrid electric vehicle, and a first fuel consumption amount per unit distance and a first electricity consumption amount per unit distance.

The unit distance is expressed in kilometer (Km), meter (m), or other ways. For example, 100 Km is a unit distance, or, 1 Km is a unit distance.

The hybrid electric vehicle includes a fuel storage room and a battery. The fuel storage room is configured to store fuel, and the battery is configured to store electric energy. The hybrid electric vehicle determines the first fuel consumption amount of the fuel and the first electricity consumption amount of the electric energy per unit distance based on the mileage, the fuel consumption, and the electricity consumption amount in the driving process.

In S102, the hybrid electric vehicle determines a product of the first electricity consumption amount and a conversion ratio as a first equivalent consumption amount, wherein the conversion ratio is a ratio of a fuel consumption amount to an electricity consumption amount per unit distance in a history driving process of the hybrid electric vehicle, and the first equivalent consumption amount refers to a fuel consumption amount converted from the first electricity consumption amount.

The conversion ratio is a ratio for converting the electricity consumption amount to a corresponding fuel consumption amount in the driving process of the hybrid electric vehicle.

In the embodiments of the present disclosure, as the hybrid electric vehicle needs to determine a drivable range of the residual fuel amount, and the hybrid electric vehicle is also driven by the electricity amount, the product of the first electricity consumption amount and the conversion ratio is acquired and determined as the first equivalent consumption amount. The first equivalent consumption amount is a fuel amount corresponding to the electricity consumption amount of the hybrid electric vehicle.

In S103, the hybrid electric vehicle determines the available range of the residual fuel amount in the hybrid electric vehicle based on the residual fuel amount, the first fuel consumption amount, and the first equivalent consumption amount.

In the embodiments of the present disclosure, as the first fuel consumption amount indicates a fuel amount required for the unit distance by the hybrid electric vehicle, and the first equivalent consumption amount indicates a fuel amount corresponding to the electricity amount required for the unit distance by the hybrid electric vehicle, the first fuel consumption amount and the first equivalent consumption amount indicate an actual fuel amount required for the unit distance by the hybrid electric vehicle. Furthermore, the available range of the residual fuel amount in the hybrid electric vehicle is determined based on the residual fuel amount, the first fuel consumption amount, and the first equivalent consumption amount.

In the technical solutions according to the embodiments of the present disclosure, the electricity consumption amount of the hybrid electric vehicle per unit distance is converted to the responding equivalent fuel consumption amount, and the available range of the residual fuel amount in the hybrid electric vehicle is determined based on the determined fuel consumption amount per unit distance and the equivalent consumption amount. As the effect of the electricity amount on the available range of the hybrid electric vehicle is eliminated, the fuel consumption amount and the electricity consumption amount are comprehensively considered, and the accuracy of determining the range of the hybrid electric vehicle supported by the residual fuel is improved.

Upon determination of the available range, the hybrid electric vehicle displays the available range on the instrument panel or the display screen to show the user the available range and remind the user of attention. In some embodiments, the hybrid electric vehicle further updates the available range displayed on the instrument panel or the display screen in time based on the subsequent driving situation using the method for determining the available range according to the embodiments of the present disclosure, such that the user knows the available range of the vehicle in time and timely replenish fuel or recharge the battery according to the actual demand.

In some embodiments of the present disclosure, upon determination of the available range, in the case that the determined available range does not support the driving destination input by the user before driving, the driving information of the hybrid electric vehicle is adjusted based on the determined available range, and the hybrid electric vehicle is controlled to drive based on the adjusted driving information. The driving information of the hybrid electric vehicle includes at least one of the driving mode or the driving destination.

Illustratively, the hybrid electric vehicle is equipped with the autonomous driving function. Before driving, the user inputs the driving destination over the in-vehicle display screen and activates the autonomous driving function. The in-vehicle display screen transmits the driving destination input by the user to the in-vehicle control computer, such that the in-vehicle computer takes the driving destination as the navigation destination to plan the navigation route, and controls the hybrid electric vehicle to drive based on the planned navigation route. In the normal driving of the hybrid electric vehicle based on the navigation route, the above processes of determining the available range are triggered in real time or periodically. In the case that the determined available range does not support the driving destination predetermined by the user, the in-vehicle computer controls the hybrid electric vehicle to change the driving mode. For example, the in-vehicle computer changes the current driving mode to an extended-range mode or an energy-saving mode. In the extended-range mode, the engine charges the battery and the battery drives the vehicle to extend the driving range. In the energy-saving mode, the vehicle turns off unnecessary energy consumption, such as turning off the air conditioning system, the sound system, or the like. Additionally or alternatively, the in-vehicle computer also controls the hybrid electric vehicle to change the current driving destination. For example, the in-vehicle computer sets the nearest gasoline station or charging station as the new driving destination, replans the navigation route, and drives to the driving destination input by the user upon replenishing fuel or recharging the battery.

FIG. 2 is a flowchart of a method for determining an available range according to some embodiments of the present disclosure. Referring to FIG. 2, the method is applicable to the hybrid electric vehicle. Specifically, the method is applicable to an in-vehicle control computer of the hybrid electric vehicle. The method includes the following processes.

In S201, a hybrid electric vehicle acquires a second electricity consumption amount per unit distance in the case that the hybrid electric vehicle is driven by electric energy and a second fuel consumption amount per unit distance in the case that the hybrid electric vehicle is driven by fuel.

The hybrid electric vehicle is driven by at least one of the electric energy or fuel. The hybrid electric vehicle may be driven only by electric energy. That is, the electricity consumption amount per unit distance is the second electricity consumption amount in the case that the hybrid electric vehicle is driven only by electric energy. In addition, the hybrid electric vehicle may be driven only by fuel. That is, the fuel consumption amount per unit distance is the second fuel consumption amount in the case that the hybrid electric vehicle is driven only by fuel.

In some embodiments, in the case that the hybrid electric vehicle is driven by fuel, the generated kinetic energy also charges the battery. In this case, the hybrid electric vehicle is also driven by electric energy. Therefore, in the embodiments of the present disclosure, the hybrid electric vehicle being driven by fuel means that the electricity amount of the battery of the hybrid electric vehicle is unchanged before and after driving. In this case, it is considered that the hybrid electric vehicle is driven only by fuel.

In some embodiments, the fuel consumption amount is expressed in liter (L) or in other units, and the electricity consumption amount is expressed in kilowatt-hour (kw.h) or in other units.

In some embodiments, the method for acquiring the fuel consumption amount by the hybrid electric vehicle includes acquiring the fuel consumption amount of the hybrid electric vehicle by performing integration calculation on a fuel-injecting pulse and a fuel-injecting pressure of a fuel injector of the engine.

In some embodiments, the method for acquiring the electricity consumption amount by the hybrid electric vehicle includes acquiring the electricity consumption amount of the hybrid electric vehicle by performing integration calculation on a current and a voltage of a busbar of a high voltage battery.

It should be noted that the hybrid electric vehicle is driven by electric energy or the fuel in the same road situation, environment, and temperature in the embodiments of the present disclosure, such that the accuracy of the conversion ratio subsequently determined based on the second fuel consumption amount and the second electricity consumption amount is improved.

In S202, the hybrid electric vehicle determines a ratio of the second fuel consumption amount to the second electricity consumption amount as the conversion ratio.

In the embodiments of the present disclosure, each of the second fuel consumption amount and the second electricity consumption amount is a consumption amount per unit distance. Thus, the ratio of the second fuel consumption amount to the second electricity consumption amount indicates a ratio of the fuel consumption amount to the electricity consumption amount per unit distance in the history driving process of the hybrid electric vehicle.

In some embodiments, the process of determining the ratio of the second fuel consumption amount to the second electricity consumption amount as the conversion ratio is performed each predetermined time interval. That is, the hybrid electric vehicle acquires the second electricity consumption amount in the case that the hybrid electric vehicle is driven by electric energy and the second fuel consumption amount in the case that the hybrid electric vehicle is driven by fuel each predetermined time interval, and determines the ratio of the second fuel consumption amount to the second electricity consumption amount as the conversion ratio. That is, the hybrid electric vehicle periodically updates the conversion ratio, such that the conversion ratio fits the conversion situation of the hybrid electric vehicle to ensure personalized setting of the determined conversion ratio.

The predetermined time interval is set by a designer according to the actual demand, for example, one day, five days, one month, or other values. For example, the predetermined time interval is one day, the hybrid electric vehicle acquires the second electricity consumption amount and the second fuel consumption amount is driven by fuel each one day, and determines the ratio of the second fuel consumption amount to the second electricity consumption amount as the conversion ratio.

In some embodiments, the hybrid electric vehicle acquires a third electricity consumption amount and a third fuel consumption amount consumed by a target distance of the hybrid electric vehicle, and acquires an adjusted conversion ratio by adjusting the conversion ratio based on a ratio of the third fuel consumption amount to the third electricity consumption amount and the conversion ratio. The third electricity consumption amount is an electricity amount consumed in the case that the hybrid electric vehicle is driven by electric energy, and the third fuel consumption amount is a fuel amount consumed in the case that the hybrid electric vehicle is driven by fuel.

In the embodiments of the present disclosure, upon determination of the conversion ratio, the hybrid electric vehicle determines a ratio of the third fuel consumption amount to the third electricity consumption amount based on the subsequently recorded third electricity consumption amount and the third fuel consumption amount required for the target distance of the hybrid electric vehicle, compares the ratio to the conversion ratio of the hybrid electric vehicle, and adjusts the conversion ratio based on the compared result to acquire the accurate conversion ratio.

How to adjust the conversion ratio based on the compared result is described hereinafter.

In a first case, the adjusted conversion ratio is acquired by increasing the conversion ratio by a first ratio in the case that the ratio of the third fuel consumption amount to the third electricity consumption amount is greater than the conversion ratio.

In the embodiments of the present disclosure, in the case that the ratio of the third fuel consumption amount to the third electricity consumption amount is greater than the conversion ratio, the conversion ratio used by the hybrid electric vehicle is low and needs to be increased, and thus the conversion ratio is increased by the first ratio to acquire the adjusted conversion ratio.

The first ratio is 0.1, 0.2, or other values. For example, the conversion ratio is 0.6, and the first ratio is 0.1, the conversion ratio 0.6 is increased by 0.1 in the case that the ratio of the third fuel consumption amount to the third electricity consumption amount is greater than the conversion ratio, such that the adjusted conversion ratio 0.7 is acquired.

In a second case, a product of the conversion ratio and a second ratio is determined as the adjusted conversion ratio in the case that the ratio of the third fuel consumption amount to the third electricity consumption amount is greater than the conversion ratio.

In the embodiments of the present disclosure, in the case that the ratio of the third fuel consumption amount to the third electricity consumption amount is greater than the conversion ratio, the conversion ratio used by the hybrid electric vehicle is low and needs to be increased, and thus the product of the conversion ratio and the second ratio is determined as the adjusted conversion ratio.

The second ratio is a value greater than 1. For example, the second ratio is 1.1, 1.5, or other values. For example, the conversion ratio is 0.6, and the second ratio is 1.5, the product 0.9 of the conversion ratio 0.6 and 1.5 is determined as the adjusted conversion ratio in the case that the ratio of the third fuel consumption amount to the third electricity consumption amount is greater than the conversion ratio.

In a third case, the adjusted conversion ratio is acquired by reducing the conversion ratio by a third ratio in the case that the ratio of the third fuel consumption amount to the third electricity consumption amount is less than the conversion ratio.

In the embodiments of the present disclosure, in the case that the ratio of the third fuel consumption amount to the third electricity consumption amount is less than the conversion ratio, the conversion ratio used by the hybrid electric vehicle is great and needs to be reduced, and thus the conversion ratio is reduced by the third ratio to acquire the adjusted conversion ratio.

The third ratio is 0.1, 0.2, or other values. For example, the conversion ratio is 0.6, and the third ratio is 0.1, the conversion ratio 0.6 is reduced by 0.1 in the case that the ratio of the third fuel consumption amount to the third electricity consumption amount is less than the conversion ratio, such that the adjusted conversion ratio 0.5 is acquired.

In a fourth case, a product of the conversion ratio and a fourth ratio is determined as the adjusted conversion ratio in the case that the ratio of the third fuel consumption amount to the third electricity consumption amount is less than the conversion ratio.

In the embodiments of the present disclosure, in the case that the ratio of the third fuel consumption amount to the third electricity consumption amount is less than the conversion ratio, the conversion ratio used by the hybrid electric vehicle is great and needs to be reduced, and thus the product of the conversion ratio and the fourth ratio is determined as the adjusted conversion ratio.

The fourth ratio is a value less than 1. For example, the fourth ratio is 0.8, 0.9, or other values. For example, the conversion ratio is 0.6, and the fourth ratio is 0.8, the product 0.48 of the conversion ratio 0.6 and 0.8 is determined as the adjusted conversion ratio in the case that the ratio of the third fuel consumption amount to the third electricity consumption amount is less than the conversion ratio.

It should be noted that the first ratio, the second ratio, the third ration, and the fourth ratio in the embodiments of the present disclosure do not limit each other, and may be any value.

In S203, the hybrid electric vehicle acquires a residual fuel amount in the hybrid electric vehicle, and a first fuel consumption amount and a first electricity consumption amount per unit distance.

For example, the driving range of the hybrid electric vehicle is S, the hybrid electric vehicle detects that the fuel consumption amount of the driving range S is T and the electricity consumption amount of the driving range S is W, and then the first fuel consumption amount is T/S, and the first electricity consumption amount is W/S.

In some embodiments, the hybrid electric vehicle acquires the residual fuel amount thereof by a sensor. For example, the fuel used by the hybrid electric vehicle is gasoline, the sensor is a fuel amount sensor, and the residual fuel amount in the hybrid electric vehicle is acquired by fuel amount sensor.

In S204, the hybrid electric vehicle determines a product of the first electricity consumption amount and the conversion ratio as a first equivalent consumption amount, wherein the conversion ratio is a ratio of a fuel consumption amount to an electricity consumption amount per unit distance in a history driving process of the hybrid electric vehicle, and the first equivalent consumption amount refers to a fuel consumption amount converted from the first electricity consumption amount.

In S205, the hybrid electric vehicle determines a sum of the first fuel consumption amount and the first equivalent consumption amount as an average fuel consumption amount per unit distance.

In the embodiments of the present disclosure, in the case that the hybrid electric vehicle needs to determine the available range of the residual fuel amount, the hybrid electric vehicle needs to determine a fuel consumption amount required for the unit distance of the hybrid electric vehicle based on the first fuel consumption amount and the first equivalent consumption amount.

It should be noted that in the driving process of the hybrid electric vehicle, the hybrid electric vehicle is driven by electric energy, or the hybrid electric vehicle charges the battery in driving by fuel. Thus, the positive or negative situation of the consumption amount indicate whether the hybrid electric vehicle is driven by electric energy or charges the battery.

In some embodiments, in the case that the first electricity consumption amount is negative, a fourth fuel consumption amount in the first fuel consumption amount is converted to the first electricity consumption amount, wherein the fourth fuel consumption amount is less than the first fuel consumption amount.

In the embodiments of the present disclosure, in the case that the first electricity consumption amount is negative, part of fuel consumed by the hybrid electric vehicle is converted to electricity. In this case, the electricity amount of the hybrid electric vehicle is increased, and thus the first electricity consumption amount is set to be negative. The fuel of the corresponding consumption amount is excluded subsequently, and the remained fuel consumption amount is the fuel consumed by driving the hybrid electric vehicle.

In some embodiments, in the case that the first electricity consumption amount is positive, the first electricity consumption amount is used to drive the hybrid electric vehicle.

In the embodiments of the present disclosure, in the case that the first electricity consumption amount is positive, the hybrid electric vehicle is driven by electric energy. In this case, the electricity amount of the hybrid electric vehicle is reduced, and thus the first electricity consumption amount is set to be positive. The first electricity consumption amount is equivalent to fuel of the corresponding consumption amount, and the consumed fuel amount and the equivalent fuel amount are determined as a total fuel consumption amount of the hybrid electric vehicle.

It should be noted that in the latest range S of the hybrid electric vehicle, in the case that there are a large number of electricity situations, the electricity consumption amount W in the range S is positive, the converted first equivalent consumption amount W_T is positive, and the acquired average fuel consumption amount C_T is greater than the fuel consumption amount T in the process. That is, although the fuel consumption amount is low in the range S, a consumption amount of part of electricity energy is converted to the fuel in determining the available range of the residual fuel as part of energy driving the vehicle is the electricity, and the converted fuel is added to the fuel consumption amount T to determine the available range.

Alternatively, in the latest range S of the hybrid electric vehicle, in the case that there are a large number of charging situations, that is, the battery is charged by the engine, the electricity consumption amount W is negative, the converted first equivalent consumption amount W_T is negative, and the acquired average fuel consumption amount C_T is less than the fuel consumption amount T in the process. That is, although the fuel consumption amount is great in the range S, part of energy is not used to drive the vehicle as part of fuel consumed by the engine is stored in the battery in the form of changing, and thus the part of not used to drive the vehicle is reduced in determining the available range of the residual fuel, and the available range is determined based on the reduced fuel consumption amount.

Alternatively, in the latest range S of the hybrid electric vehicle, in the case that the electricity consumption amount W is 0, the converted first equivalent consumption amount W_T is 0, and the acquired average fuel consumption amount C_T is equal to the fuel consumption amount T in the process. That is, all energy driving the vehicle is from fuel consumption of the engine, and the fuel consumption of the engine is completely used to drive the vehicle. Thus, in determining the available range, the calculation result based on the average fuel consumption amount C_T and the calculation result based on the fuel consumption amount T are equal.

In S206, the hybrid electric vehicle acquires a ratio of the residual fuel amount to the average fuel consumption amount, wherein the ratio indicates an amount of unit distances corresponding to the residual fuel amount.

In S207, the hybrid electric vehicle determines a product of the ratio and the unit distance as the available range of the residual fuel amount.

In the embodiments of the present disclosure, the average fuel consumption amount is a fuel consumption amount required for the unit distance of the hybrid electric vehicle, and thus, the ratio of the residual fuel amount to the average fuel consumption amount is the amount of unit distances supportable by the residual fuel amount. Thus, the product of the ratio and the unit distance is determined as the available range of the residual fuel amount, such that the accuracy of the available range is ensured.

It should be noted that the embodiments of the present disclosure are illustrated using an example where the available range is directly determined based on the residual fuel amount, the first fuel consumption amount, and the first equivalent consumption amount. In some embodiments, a consumption amount threshold is further set for the hybrid electric vehicle , and the available range of the residual fuel amount is determined based on the set consumption amount threshold in determining the available range of the residual fuel amount.

In some embodiments, a ratio of the residual fuel amount to a first consumption amount threshold is determined as the available range of the residual fuel amount in the case that the average fuel consumption amount is less than the first consumption amount threshold.

In the embodiments of the present disclosure, the acquired average fuel consumption amount is low due to different driving situations of the hybrid electric vehicle, but the driving situation does not keep for a long time. In the case that the available range is directly determined based on the average fuel consumption amount acquired in the situation, the determined available range is excessively great. Thus, the first consumption amount threshold is set, the ratio of the residual fuel amount to the average fuel consumption amount is not acquired and the ratio of the residual fuel amount to the first consumption amount threshold is determined as the available range of the residual fuel amount in the case that the average fuel consumption amount is less than the first consumption amount threshold, such that the inaccurate determined available range due to the low average fuel consumption amount is avoided.

In some embodiments, a ratio of the residual fuel amount to a second consumption amount threshold is determined as the available range of the residual fuel amount in the case that the average fuel consumption amount is greater than the second consumption amount threshold.

In the embodiments of the present disclosure, the acquired average fuel consumption amount is great due to different driving situations of the hybrid electric vehicle, but the driving situation does not keep for a long time. In the case that the available range is directly determined based on the average fuel consumption amount acquired in the situation, the determined available range is excessively low. Thus, the second consumption amount threshold is set, the ratio of the residual fuel amount to the average fuel consumption amount is not acquired and the ratio of the residual fuel amount to the second consumption amount threshold is determined as the available range of the residual fuel amount in the case that the average fuel consumption amount is greater than the second consumption amount threshold, such that the inaccurate determined available range due to the great average fuel consumption amount is avoided.

It should be noted that in the embodiments of the present disclosure, the first consumption amount threshold is less than the second consumption amount threshold.

In the technical solutions according to the embodiments of the present disclosure, the electricity consumption amount of the hybrid electric vehicle per unit distance is converted to the responding equivalent fuel consumption amount, and the available range of the residual fuel amount in the hybrid electric vehicle is determined based on the determined fuel consumption amount per unit distance and the equivalent consumption amount. As the effect of the electricity amount on the available range of the hybrid electric vehicle is eliminated, the fuel consumption amount and the electricity consumption amount are comprehensively considered, and the accuracy of determining the range of the hybrid electric vehicle supported by the residual fuel is improved.

In addition, the hybrid electric vehicle periodically updates the conversion ratio, such that the conversion ratio fits the conversion situation of the hybrid electric vehicle to ensure personalized setting of the determined conversion ratio.

In addition, the consumption amount threshold is set in the present disclosure, whether the acquired average fuel consumption amount is reasonable is determined by determining the relationship between the average fuel consumption amount and the consumption amount threshold, and then whether the average fuel consumption amount is used to determine the available range of the residual fuel amount is further determined, such that the inaccurate determined available range due to the great average fuel consumption amount is avoided. The method for determining the available range according to the present disclosure is illustrated using an example.
1. The working situation test is carried out in the electric vehicle mode and the fuel vehicle mode in advance. The measured electricity consumption amount in the electric vehicle mode is 15 kw.h/100km, and the measured fuel consumption amount in the fuel vehicle mode is 5 L/100km. Thus, the electricity-fuel conversion coefficient is: $\left(5 L/100 km\right) / \left(15 kw.h/100 km\right) = 0.33 L / kw . h .$
2. It is assumed that the latest travel is 100 km.
3. The fuel consumption amount in the latest travel 100 km is 8 L by performing integration calculation on the fuel-injection pulse and the fuel-injection pressure of the fuel injector of the engine.
4. The electricity consumption amount in the latest travel 100 km is -10 kw.h by performing integration calculation on the current and the voltage of the busbar of the high voltage battery. The negative value indicates that the engine charges the high voltage battery in the travel.
5. The equivalent consumption amount corresponding to the electricity consumption amount in the latest travel 100 km is: $\left(-10 kw.h\right) * \left(0.33 L/kw.h\right) = - 3.3 L .$
6. The average consumption amount in the latest travel 100 km is: $8 L + \left(-3.3L\right) = 4.7 L .$
   The average consumption amount per 1 km in the latest travel 100 km is: $4.7 L / 100 km = 0.047 L / km .$
7. The lower limit of average consumption amount per 1 km is set to 0.04 L/km, the upper limit of average consumption amount per 1 km is set to 0.1 L/km, then the average comprehensive energy consumption amount per 1 km calculated in (6) is within the upper limit and the lower limit, and thus is directly used to calculate the available range.
8. Assuming that the residual fuel amount acquired by fuel amount sensor is 40 L, then the available range is 40 L/(0.047 L/km)=851 km.
9. It is assumed that the fuel amount is 50 L in the case that the fuel is filled in the hybrid electric vehicle. No matter which driving scenario, in the case that the fuel is filled, the maximum available range is displayed as: 50 L/(0.04 L/km)=1250 km, and the minimum fuel available range is displayed as: 50 L/(0.1 L/km)=500 km.

Upon determination of the available range, the hybrid electric vehicle displays the available range on the instrument panel or the display screen to show the user the available range and remind the user of attention. In some embodiments, the hybrid electric vehicle further updates the available range displayed on the instrument panel or the display screen in time based on the subsequent driving situation using the method for determining the available range according to the embodiments of the present disclosure, such that the user knows the available range of the vehicle in time and timely replenish fuel or recharge the battery according to the actual demand.

In some embodiments of the present disclosure, upon determination of the available range, in the case that the determined available range does not support the driving destination input by the user before driving, the driving information of the hybrid electric vehicle is adjusted based on the determined available range, and the hybrid electric vehicle is controlled to drive based on the adjusted driving information. The driving information of the hybrid electric vehicle includes at least one of the driving mode or the driving destination.

Illustratively, the hybrid electric vehicle is equipped with the autonomous driving function. Before driving, the user inputs the driving destination over the in-vehicle display screen and activates the autonomous driving function. The in-vehicle display screen transmits the driving destination input by the user to the in-vehicle control computer, such that the in-vehicle computer takes the driving destination as the navigation destination to plan the navigation route, and controls the hybrid electric vehicle to drive based on the planned navigation route. In the normal driving of the hybrid electric vehicle based on the navigation route, the above processes of determining the available range are triggered in real time or periodically. In the case that the determined available range does not support the driving destination predetermined by the user, the in-vehicle computer controls the hybrid electric vehicle to change the driving mode. For example, the in-vehicle computer changes the current driving mode to an extended-range mode or an energy-saving mode. In the extended-range mode, the engine charges the battery and the battery drives the vehicle to extend the driving range. In the energy-saving mode, the vehicle blocks unnecessary energy consumption, such as turning off the air conditioning system, the sound system, and the like. Additionally or alternatively, the in-vehicle computer also controls the hybrid electric vehicle to change the current driving destination. For example, the in-vehicle computer sets the nearest gasoline station or charging station as the new driving destination, replans the navigation route, and drives to the driving destination input by the user upon replenishing fuel or recharging the battery.

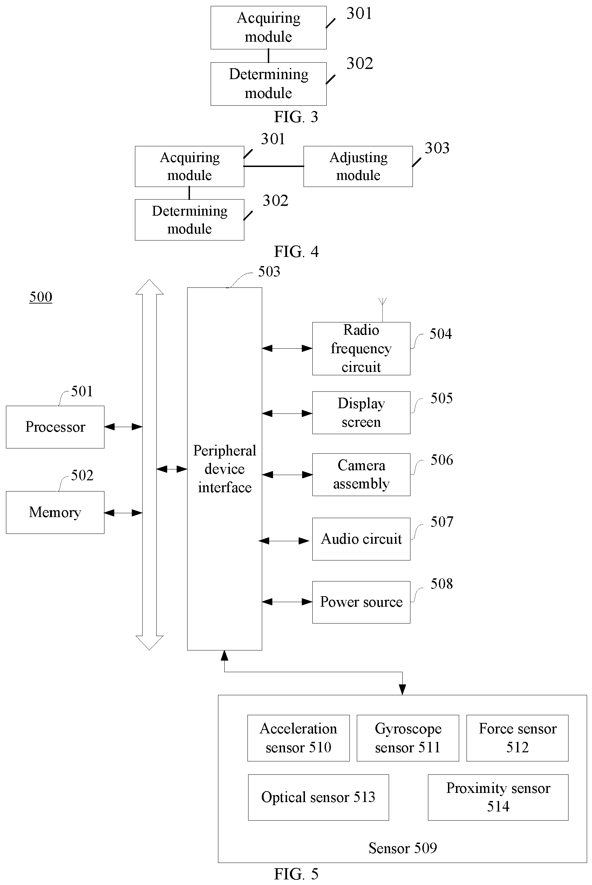

FIG. 3 is a schematic structural diagram of an apparatus for determining an available range according to some embodiments of the present disclosure. Referring to FIG. 3, the apparatus includes the following modules.
an acquiring module 301, configured to acquire a residual fuel amount in a hybrid electric vehicle, and a first fuel consumption amount per unit distance and a first electricity consumption amount per unit distance;
a determining module 302, configured to determine a product of the first electricity consumption amount and a conversion ratio as a first equivalent consumption amount, wherein the conversion ratio is a ratio of a fuel consumption amount to an electricity consumption amount per unit distance in a history driving process of the hybrid electric vehicle, and the first equivalent consumption amount refers to a fuel consumption amount converted from the first electricity consumption amount; and
the determining module 302, further configured to determine the available range of the residual fuel amount in the hybrid electric vehicle based on the residual fuel amount, the first fuel consumption amount, and the first equivalent consumption amount.

In some embodiments, the determining module 302 is further configured to:
determine a sum of the first fuel consumption amount and the first equivalent consumption amount as an average fuel consumption amount per unit distance;
acquire a ratio of the residual fuel amount to the average fuel consumption amount, wherein the ratio indicates an amount of unit distances corresponding to the residual fuel amount; and
determine a product of the ratio and the unit distance as the available range of the residual fuel amount.

In some embodiments, the determining module 302 is further configured to:
determine a ratio of the residual fuel amount to a first consumption amount threshold as the available range of the residual fuel amount in a case that the average fuel consumption amount is less than the first consumption amount threshold; or
determine a ratio of the residual fuel amount to a second consumption amount threshold as the available range of the residual fuel amount in a case that the average fuel consumption amount is greater than the second consumption amount threshold;
wherein the first consumption amount threshold is less than second consumption amount threshold.

In some embodiments, the acquiring module 301 is further configured to acquire a second electricity consumption amount per unit distance in a case that the hybrid electric vehicle is driven by electric energy and a second fuel consumption amount per unit distance in a case that the hybrid electric vehicle is driven by fuel; and
the determining module 302 is further configured to determine a ratio of the second fuel consumption amount to the second electricity consumption amount as the conversion ratio.

In some embodiments, a process of determining the ratio of the second fuel consumption amount to the second electricity consumption amount as the conversion ratio is performed each predetermined time interval; and
the acquiring module 301 is further configured to acquire the second electricity consumption amount in the case that the hybrid electric vehicle is driven by electric energy and the second fuel consumption amount in the case that the hybrid electric vehicle is driven by fuel each predetermined time interval.

In some embodiments, the acquiring module 301 is further configured to acquire a third electricity consumption amount and a third fuel consumption amount consumed by a target driving distance of the hybrid electric vehicle, wherein the third electricity consumption amount is an electricity amount consumed in the case that the hybrid electric vehicle is driven by electric energy, and the third fuel consumption amount is a fuel amount consumed in the case that the hybrid electric vehicle is driven by fuel.

Referring to FIG. 4, the apparatus further includes an adjusting module 303, configured to acquire an adjusted conversion ratio by adjusting the conversion ratio based on a ratio of the third fuel consumption amount to the third electricity consumption amount and the conversion ratio.

In some embodiments, the adjusting module 303 is further configured to:
acquire the adjusted conversion ratio by increasing the conversion ratio by a first ratio in a case that the ratio of the third fuel consumption amount to the third electricity consumption amount is greater than the conversion ratio;
determine a product of the conversion ratio and a second ratio as the adjusted conversion ratio in a case that the ratio of the third fuel consumption amount to the third electricity consumption amount is greater than the conversion ratio;
acquire the adjusted conversion ratio by reducing the conversion ratio by a third ratio in a case that the ratio of the third fuel consumption amount to the third electricity consumption amount is less than the conversion ratio; or
determine a product of the conversion ratio and a fourth ratio as the adjusted conversion ratio in a case that the ratio of the third fuel consumption amount to the third electricity consumption amount is less than the conversion ratio.

In some embodiments, in a case that the first electricity consumption amount is negative, a fourth fuel consumption amount in the first fuel consumption amount is converted to the first electricity consumption amount, wherein the fourth fuel consumption amount is less than the first fuel consumption amount; or
in a case that the first electricity consumption amount is positive, the first electricity consumption amount is used to drive the hybrid electric vehicle.

It should be noted that the apparatus for determining the available range in the above embodiments is illustrated in determining the available range using an example of the all division of the functional modules. In actual implementations, the above functions are achieved by different functional modules as required, that is, the internal structure of the hybrid electric vehicle is divided into different functional modules to achieve all or part of the functions described above. In addition, the apparatus for determining the available range and the method for determining the available range are the same concept, and the detailed implementations are referred to the method embodiments, which are not repeated herein.

Referring to FIG. 5, FIG. 5 is a structural block diagram of a hybrid electric vehicle 500 according to some embodiments of the present disclosure. In general, the in-vehicle control computer of the hybrid electric vehicle 500 includes a processor 501 and a memory 502.

In some embodiments, the processor 501 includes one or more processing cores, for example, a four-core processor, an eight-core processor, or the like. In some embodiments, the processor 501 is practiced by at least one hardware of a digital signal processor (DSP), a field-programmable gate array (FPGA), or a programmable logic array (PLA). In some embodiments, the processor 501 further includes a primary processor and a secondary processor. The primary processor is a processor configured to process data in an active state, and is also referred to as a central processing unit (CPU). The secondary processor is a low-electricity consumption processor configured to process data in a standby state. In some embodiments, the processor 501 is integrated with a graphics processing unit (GPU), and the GPU is configured to render and draw the content to be displayed on the display screen. In some embodiments, the processor 501 further includes an artificial intelligence (AI) processor configured to perform calculation operations related to machine learning.

In some embodiments, the memory 502 includes one or more computer-readable storage medium, and the computer-readable storage medium is non-transitory. In some embodiments, the memory 502 further includes a high-speed random-access memory, and a non-volatile memory, for example, one or more magnetic disk storage devices or flash storage devices. In some embodiments, the non-transitory computer-readable storage medium in the memory 502 is configured to store one or more program codes. The one or more program codes, when loaded and run by the processor 501, cause the processor 501 to perform processes performed by the hybrid electric vehicle in the method for determining the available range according to the embodiments of the present disclosure.

In some embodiments, the in-vehicle control computer of the hybrid electric vehicle 500 includes a peripheral device interface 503 and at least one peripheral device. In some embodiments, the processor 501, the memory 502, and the peripheral device interface 503 are connected to each other over a bus or a signal line. In some embodiments, the peripheral device is connected to the peripheral device interface 503 over a bus, a signal line, or a circuit board. Specifically, the peripheral device includes at least one of a radio frequency circuit 504, a display screen 505, a camera assembly 506, an audio circuit 507, or a power source 508.

The peripheral device interface 503 is configured to connect the at least one peripheral device related to input/output (I/O) to the processor 501 and the memory 502. In some embodiments, the processor 501, the memory 502, and the peripheral device interface 503 are integrated on the same chip or circuit board. In some embodiments, any one or two of the processor 501, the memory 502, and the peripheral device interface 503 are practiced on a separate chip or circuit board.

The radio frequency circuit 504 is configured to receive and transmit a radio frequency (RF) signal, which is also referred to as an electromagnetic signal. The radio frequency circuit 504 is communicated with a communication network or another communication device via the electromagnetic signal. The radio frequency circuit 504 converts an electrical signal to an electromagnetic signal for transmission, or converts a received electromagnetic signal to an electrical signal. In some embodiments, the radio frequency circuit 504 includes: an antenna system, an RF transceiver, one or more amplifiers, a tuner, an oscillator, a digital signal processor, a codec chip set, a user identification module card, or the like. In some embodiments, the radio frequency circuit 504 is communicated with another hybrid electric vehicle based on at least one wireless communication protocol. The wireless communication protocol includes, but is not limited to: a world wide web, a metropolitan area network, an intranet, various generations of mobile communication networks (2G, 3G, 4G, and 5G), a wireless local area network and/or a wireless fidelity (Wi-Fi) network. In some embodiments, the radio frequency circuit 504 further includes a near-field communication (NFC)-related circuits.

The display screen 505 is configured to display a user interface (UI). In some embodiments, the UE includes graphics, texts, icons, videos, and any combination thereof. In the case that the display screen 505 is a touch display screen, the display screen 505 further has the capability of acquiring a touch signal on or above the surface of the display screen 505. In some embodiments, the touch signal is input to the processor 501 as a control signal for processing. In this case, the display screen 505 is further configured to provide a virtual button and/or a virtual keyboard or keypad, which is also referred to as a soft button and/or a soft keyboard or keypad. In some embodiments, one display screen 505 is provided, which is disposed on a front panel of the hybrid electric vehicle 500. In some embodiments, at least two display screens 505 are provided, which are respectively disposed on different surfaces of the hybrid electric vehicle 500 or designed in a folded fashion. In some embodiments, the display screen 505 is a flexible display screen disposed on a bent surface or a folded surface of the hybrid electric vehicle 500. Even, the display screen 505 is further disposed as an irregular pattern other than a rectangular, that is, a specially-shaped screen. In some embodiments, the display screen 505 is fabricated from such materials as a liquid crystal display (LCD), an organic light-emitting diode (OLED), or the like.

The camera assembly 506 is configured to capture an image or a video. In some embodiments, the camera assembly 506 includes a front camera and/or a rear camera. Generally, the front camera is disposed on a front panel of the terminal, and the rear camera is disposed on a rear panel of the terminal. In some embodiments, at least two rear cameras are disposed, which are any one of a primary camera, a depth of field camera, a wide-angle camera, and a long-focus camera, such that the primary camera and the DOF camera are fused to achieve the background virtualization function, and the primary camera and the wide-angle camera are fused to implement the panorama photographing and virtual reality (VR) photographing functions or other fused photographing functions. In some embodiments, the camera assembly 506 further includes a flash. In some embodiments, the flash is a single-color temperature flash or a double-color temperature flash. The double-color temperature flash refers to a combination of a warm-light flash and a cold-light flash, which is used for light compensation under different color temperatures.

The audio circuit 507 includes a microphone and a speaker. The microphone is configured to capture an acoustic wave of a user and an environment, and convert the acoustic wave to an electrical signal and output the electrical signal to the processor 501 for further processing, or output to the radio frequency circuit 504 to achieve voice communication. For the purpose of stereo capture or noise reduction, a plurality of such microphones are provided, which are disposed at different positions of the hybrid electric vehicle 500. In some embodiments, the microphone is a microphone array or an omnidirectional capturing microphone. The speaker is configured to convert an electrical signal from the processor 501 or the radio frequency circuit 504 to an acoustic wave. In some embodiments, the speaker is a traditional thin-film speaker, or a piezoelectric ceramic speaker. In the case that the speaker is a piezoelectric ceramic speaker, an electrical signal is converted to an acoustic wave audible by human beings, or an acoustic wave inaudible by human beings for the purpose of ranging or the like. In some embodiments, the audio circuit 507 further includes a headphone plug.

The positioning assembly 508 is configured to supply power for various assemblies in the hybrid electric vehicle 500. In some embodiments, the power source 508 is an alternating current, a direct current, a disposable battery, or a rechargeable battery. In the case that the power source 508 includes a rechargeable battery, the rechargeable battery is a wired charging battery or a wireless charging battery. The wired charging battery is a battery charged in a wired line, and the wireless charging battery is a battery changed in a wireless coil. The rechargeable battery also supports the supercharging technology.

In some embodiments, the hybrid electric vehicle 500 further includes one or more sensors 509. The one or more sensors 509 include, but are not limited to: an acceleration sensor 510, a gyroscope sensor 511, a force sensor 512, an optical sensor 513, and a proximity sensor 514.

In some embodiments, the acceleration sensor 510 is configured to detect accelerations on three coordinate axes in a coordinate system established for the hybrid electric vehicle 500. For example, the acceleration sensor 510 is configured to detect components of a gravity acceleration on the three coordinate axes. In some embodiments, the processor 501 controls the display screen 505 to display the user interface in a horizontal view or a longitudinal view based on a gravity acceleration signal acquired by the acceleration sensor 510. In some embodiments, the acceleration sensor 510 is further configured to acquire motion data of a game or a user.

In some embodiments, the gyroscope sensor 511 is configured to detect a body direction and a rotation angle of the hybrid electric vehicle 500, and the gyroscope sensor 511 is collaborated with the acceleration sensor 510 to capture a 3D action performed by the user for the hybrid electric vehicle 500. Based on the data acquired by the gyroscope sensor 511, the processor 501 achieves the following functions: action sensing (for example, modifying the UI based on an inclination operation of the user), image stabilization in photographing, game control, and inertial navigation.

In some embodiments, the force sensor 512 is disposed on a side frame of the hybrid electric vehicle 500 and/or on a lowermost layer of the display screen 505. In the case that the force sensor 512 is disposed on the side frame of the hybrid electric vehicle 500, a grip signal of the user against the hybrid electric vehicle 500 is detected, and the processor 501 performs a left or right hand identification or performs a shortcut operation based on the grip signal acquired by the force sensor 512. In the case that the force sensor 512 is disposed on the lowermost layer of the display screen 505, the processor 501 achieves control of an operable control on the UI based on a force operation of the user against the display screen 505. The operable control includes at least one of a button control, a scroll bar control, an icon control, and a menu control.

The optical sensor 513 is configured to acquire the intensity of ambient light. In one embodiment, the processor 501 controls a display luminance of the display screen 505 based on the intensity of ambient light acquired by the optical sensor 513. Specifically, in the case that the intensity of ambient light is high, the display luminance of the display screen 505 is up-shifted; and in the case that the intensity of ambient light is low, the display luminance of the display screen 505 is down-shifted. In some embodiments, the processor 501 further dynamically adjusts photographing parameters of the camera assembly 506 based on the intensity of ambient light acquired by the optical sensor 513.

The proximity sensor 514, also referred to as a distance sensor, is generally disposed on the front panel of the hybrid electric vehicle 500. The proximity sensor 514 is configured to acquire a distance between the user and the front face of the hybrid electric vehicle 500. In some embodiments, in the case that the proximity sensor 514 detects that the distance between the user and the front face of the hybrid electric vehicle 500 gradually decreases, the processor 501 controls the display screen 505 to switch from an active state to a rest state; and in the case that the proximity sensor 514 detects that the distance between the user and the front face of the hybrid electric 500 vehicle gradually increases, the processor 501 controls the display screen 505 to switch from the rest state to the active state.

A person skilled in the art may understand that the structure as illustrated in FIG. 5 does not construe a limitation on the hybrid electric vehicle 500 and the in-vehicle control computer thereof. The hybrid electric vehicle 500 according to the embodiments of the present disclosure includes more or fewer assemblies over those illustrated in the drawing, or combinations of some components, or does not include the assemblies illustrated in the drawing, or employ different component deployments.

In some embodiments, a computer-readable storage medium is provided. The computer-readable storage medium stores one or more program codes, wherein the one or more program codes, when loaded and run by a processor, cause the processor to perform the method for determining the available range according to any above embodiments.

It should be understood by persons of ordinary skill in the art that all or part of the processes in the above-mentioned embodiments may be implemented by hardware, or by a corresponding hardware instructed by a program. The program may be stored in a computer-readable storage medium, and the storage medium mentioned above may be a read-only memory, a magnetic disk, an optical disk, or the like.

## Claims

1. A method for determining an available range, applicable to a hybrid electric vehicle, the method comprising:
acquiring (101, 203) a residual fuel amount in the hybrid electric vehicle, and a first fuel consumption amount per unit distance and a first electricity consumption amount per unit distance;
determining (102, 204) a product of the first electricity consumption amount and a conversion ratio as a first equivalent consumption amount, wherein the conversion ratio is a ratio of a fuel consumption amount to an electricity consumption amount per unit distance in a history driving process of the hybrid electric vehicle, and the first equivalent consumption amount refers to a fuel consumption amount converted from the first electricity consumption amount; and
determining (103) the available range of the residual fuel amount in the hybrid electric vehicle based on the residual fuel amount, the first fuel consumption amount, and the first equivalent consumption amount;
wherein determining(103) the available range of the residual fuel amount in the hybrid electric vehicle based on the residual fuel amount, the first fuel consumption amount, and the first equivalent consumption amount comprises:
determining (205) a sum of the first fuel consumption amount and the first equivalent consumption amount as an average fuel consumption amount per unit distance;
acquiring (206) a ratio of the residual fuel amount to the average fuel consumption amount, wherein the ratio indicates an amount of unit distances corresponding to the residual fuel amount; and
determining (207) a product of the ratio and the unit distance as the available range of the residual fuel amount;
**characterized in that** the method further comprises:
determining a ratio of the residual fuel amount to a first consumption amount threshold as the available range of the residual fuel amount in a case that the average fuel consumption amount is less than the first consumption amount threshold; or
determining a ratio of the residual fuel amount to a second consumption amount threshold as the available range of the residual fuel amount in a case that the average fuel consumption amount is greater than the second consumption amount threshold;
wherein the first consumption amount threshold is less than second consumption amount threshold.

2. The method according to claim 1, further comprising:
acquiring (201) a second electricity consumption amount per unit distance in a case that the hybrid electric vehicle is driven by electric energy and a second fuel consumption amount per unit distance in a case that the hybrid electric vehicle is driven by fuel; and
determining (202) a ratio of the second fuel consumption amount to the second electricity consumption amount as the conversion ratio.

3. The method according to claim 2, wherein a process of determining the ratio of the second fuel consumption amount to the second electricity consumption amount as the conversion ratio is performed each predetermined time interval, and acquiring (201) the second electricity consumption amount in the case that the hybrid electric vehicle is driven by electric energy and the second fuel consumption amount in the case that the hybrid electric vehicle is driven by fuel comprises:
acquiring the second electricity consumption amount in the case that the hybrid electric vehicle is driven by electric energy and the second fuel consumption amount in the case that the hybrid electric vehicle is driven by fuel each predetermined time interval.

4. The method according to claim 2, further comprising:
acquiring a third electricity consumption amount and a third fuel consumption amount consumed by a target distance of the hybrid electric vehicle, wherein the third electricity consumption amount is an electricity amount consumed in the case that the hybrid electric vehicle is driven by electric energy, and the third fuel consumption amount is a fuel amount consumed in the case that the hybrid electric vehicle is driven by fuel; and
acquiring an adjusted conversion ratio by adjusting the conversion ratio based on a ratio of the third fuel consumption amount to the third electricity consumption amount and the conversion ratio.

5. The method according to claim 4, wherein acquiring the adjusted conversion ratio by adjusting the conversion ratio based on the ratio of the third fuel consumption amount to the third electricity consumption amount and the conversion ratio comprises:
acquiring the adjusted conversion ratio by increasing the conversion ratio by a first ratio in a case that the ratio of the third fuel consumption amount to the third electricity consumption amount is greater than the conversion ratio;
determining a product of the conversion ratio and a second ratio as the adjusted conversion ratio in a case that the ratio of the third fuel consumption amount to the third electricity consumption amount is greater than the conversion ratio;
acquiring the adjusted conversion ratio by reducing the conversion ratio by a third ratio in a case that the ratio of the third fuel consumption amount to the third electricity consumption amount is less than the conversion ratio; or
determining a product of the conversion ratio and a fourth ratio as the adjusted conversion ratio in a case that the ratio of the third fuel consumption amount to the third electricity consumption amount is less than the conversion ratio.

6. The method according to claim 1, wherein
in a case that the first electricity consumption amount is negative, a fourth fuel consumption amount in the first fuel consumption amount is converted to the first electricity consumption amount, wherein the fourth fuel consumption amount is less than the first fuel consumption amount; or
in a case that the first electricity consumption amount is positive, the first electricity consumption amount is used to drive the hybrid electric vehicle.

7. An apparatus for determining an available range, comprising:
an acquiring module (301), configured to acquire a residual fuel amount in a hybrid electric vehicle, and a first fuel consumption amount per unit distance and a first electricity consumption amount per unit distance;
a determining module (302), configured to determine a product of the first electricity consumption amount and a conversion ratio as a first equivalent consumption amount, wherein the conversion ratio is a ratio of a fuel consumption amount to an electricity consumption amount per unit distance in a history driving process of the hybrid electric vehicle, and the first equivalent consumption amount refers to a fuel consumption amount converted from the first electricity consumption amount; and
the determining module (302), further configured to determine the available range of the residual fuel amount in the hybrid electric vehicle based on the residual fuel amount, the first fuel consumption amount, and the first equivalent consumption amount;
the determining module (302), further configured to:
determine a sum of the first fuel consumption amount and the first equivalent consumption amount as an average fuel consumption amount per unit distance;
acquire a ratio of the residual fuel amount to the average fuel consumption amount, wherein the ratio indicates an amount of unit distances corresponding to the residual fuel amount; and
determine a product of the ratio and the unit distance as the available range of the residual fuel amount;
**characterized in that** the determining module (302) is further configured to:
determine a ratio of the residual fuel amount to a first consumption amount threshold as the available range of the residual fuel amount in a case that the average fuel consumption amount is less than the first consumption amount threshold; or
determine a ratio of the residual fuel amount to a second consumption amount threshold as the available range of the residual fuel amount in a case that the average fuel consumption amount is greater than the second consumption amount threshold;
wherein the first consumption amount threshold is less than second consumption amount threshold.

8. A hybrid electric vehicle (500), comprising: a processor (501) and a memory (502) storing one or more program codes, wherein the processor (502), when loading and running the one or more program codes, is caused to perform the method for determining the available range as defined in any one of claims 1 to 6.

9. A computer-readable storage medium, storing one or more program codes, wherein the one or more program codes, when loaded and run by a processor, cause the processor to perform the method for determining the available range as defined in any one of claims 1 to 6.

## Patentansprüche

1. Verfahren zum Bestimmen einer verfügbaren Reichweite, anwendbar auf ein Hybrid-Elektrofahrzeug, wobei das Verfahren Folgendes umfasst:
Erfassen (101, 203) einer verbleibenden Kraftstoffmenge im Hybrid-Elektrofahrzeug und einer ersten Kraftstoffverbrauchsmenge pro Einheitsabstand und einer ersten Elektrizitätsverbrauchsmenge pro Einheitsabstand;
Bestimmen (102, 204) eines Produkts aus der ersten Elektrizitätsverbrauchsmenge und einem Umrechnungsverhältnis als eine erste äquivalente Verbrauchsmenge, wobei das Umrechnungsverhältnis ein Verhältnis der Kraftstoffverbrauchsmenge zu der Elektrizitätsverbrauchsmenge pro Einheitsabstand in einem Verlaufsfahrprozess des Hybrid-Elektrofahrzeugs ist, und
sich die erste äquivalente Verbrauchsmenge auf eine aus der ersten Elektrizitätsverbrauchsmenge umgerechnete Kraftstoffverbrauchsmenge bezieht; und
Bestimmen (103) der verfügbaren Reichweite der verbleibenden Kraftstoffmenge im Hybrid-Elektrofahrzeug basierend auf der verbleibenden Kraftstoffmenge, der ersten Kraftstoffverbrauchsmenge und der ersten äquivalenten Verbrauchsmenge;
wobei Bestimmen (103) der verfügbaren Reichweite der verbleibenden Kraftstoffmenge im Hybrid-Elektrofahrzeug basierend auf der verbleibenden Kraftstoffmenge, der ersten Kraftstoffverbrauchsmenge und der ersten äquivalenten Verbrauchsmenge Folgendes umfasst:
Bestimmen (205) einer Summe aus der ersten Kraftstoffverbrauchsmenge und der ersten äquivalenten Verbrauchsmenge als eine durchschnittliche Kraftstoffverbrauchsmenge pro Einheitsabstand;
Erfassen (206) eines Verhältnisses der verbleibenden Kraftstoffmenge zur durchschnittlichen Kraftstoffverbrauchsmenge, wobei das Verhältnis eine Anzahl von Einheitsabständen angibt, die der verbleibenden Kraftstoffmenge entsprechen; und
Bestimmen (207) eines Produkts aus dem Verhältnis und dem Einheitsabstand als die verbleibende Reichweite der verbleibenden Kraftstoffmenge;
**dadurch gekennzeichnet, dass** das Verfahren weiter Folgendes umfasst:
Bestimmen eines Verhältnisses der verbleibenden Kraftstoffmenge zu einem ersten Verbrauchsmengengrenzwert als die verfügbare Reichweite der verbleibenden Kraftstoffmenge in einem Fall, dass die durchschnittliche Kraftstoffverbrauchsmenge kleiner ist als der erste Verbrauchsmengengrenzwert; oder
Bestimmen eines Verhältnisses der verbleibenden Kraftstoffmenge zu einem zweiten Verbrauchsmengengrenzwert als die verfügbare Reichweite der verbleibenden Kraftstoffmenge in einem Fall, dass die durchschnittliche Kraftstoffverbrauchsmenge größer ist als der zweite Verbrauchsmengengrenzwert;
wobei der erste Verbrauchsmengengrenzwert geringer ist als der zweite Verbrauchsmengengrenzwert.

2. Verfahren nach Anspruch 1, weiter umfassend:
Erfassen (201) einer zweiten Elektrizitätsverbrauchsmenge pro Einheitsabstand in einem Fall, dass das Hybrid-Elektrofahrzeug mit elektrischer Energie angetrieben wird, und einer zweiten Kraftstoffverbrauchsmenge pro Einheitsabstand in einem Fall, dass das Hybrid-Elektrofahrzeug mit Kraftstoff angetrieben wird; und
Bestimmen (202) eines Verhältnisses der zweiten Kraftstoffverbrauchsmenge zur zweiten Elektrizitätsverbrauchsmenge als das Umrechnungsverhältnis.

3. Verfahren nach Anspruch 2, wobei ein Prozess zum Bestimmen des Verhältnisses der zweiten Kraftstoffverbrauchsmenge zur zweiten Elektrizitätsverbrauchsmenge als das Umrechnungsverhältnis in jedem vorbestimmten Zeitintervall durchgeführt wird, und Erfassen (201) der zweiten Elektrizitätsverbrauchsmenge in dem Fall, dass das Hybrid-Elektrofahrzeug mit elektrischer Energie angetrieben wird, und der zweiten Kraftstoffverbrauchsmenge in dem Fall, dass das Hybrid-Elektrofahrzeug mit Kraftstoff angetrieben wird, Folgendes umfasst:
Erfassen der zweiten Elektrizitätsverbrauchsmenge in dem Fall, dass das Hybrid-Elektrofahrzeug mit elektrischer Energie angetrieben wird, und der zweiten Kraftstoffverbrauchsmenge in dem Fall, dass das Hybrid-Elektrofahrzeug mit Kraftstoff angetrieben wird, in jedem vorbestimmten Zeitintervall.

4. Verfahren nach Anspruch 2, weiter umfassend:
Erfassen einer dritten Elektrizitätsverbrauchsmenge und einer dritten Kraftstoffverbrauchsmenge, die bei einem Zielabstand des Hybrid-Elektrofahrzeugs verbraucht werden, wobei die dritte Elektrizitätsverbrauchsmenge eine Elektrizitätsmenge ist, die verbraucht wird, in dem Fall, dass das Hybrid-Elektrofahrzeug mit elektrischer Energie angetrieben wird, und die dritte Kraftstoffverbrauchsmenge eine Kraftstoffmenge ist, die verbraucht wird, in dem Fall, dass das Hybrid-Elektrofahrzeug mit Kraftstoff angetrieben wird; und
Erfassen eines angepassten Umrechnungsverhältnisses durch Anpassen des Umrechnungsverhältnisses basierend auf einem Verhältnis der dritten Kraftstoffverbrauchsmenge zur dritten Elektrizitätsverbrauchsmenge und dem Umrechnungsverhältnis.

5. Verfahren nach Anspruch 4, wobei das Erfassen des angepassten Umrechnungsverhältnisses durch Anpassen des Umrechnungsverhältnisses basierend auf dem Verhältnis der dritten Kraftstoffverbrauchsmenge zur dritten Elektrizitätsverbrauchsmenge und des Umrechnungsverhältnisses Folgendes umfasst:
Erfassen des angepassten Umrechnungsverhältnisses durch Erhöhen des Umrechnungsverhältnisses um ein erstes Verhältnis in einem Fall, in dem das Verhältnis der dritten Kraftstoffverbrauchsmenge zur dritten Elektrizitätsverbrauchsmenge größer ist als das Umrechnungsverhältnis;
Bestimmen eines Produkts aus dem Umrechnungsverhältnis und einem zweiten Verhältnis als das angepasste Umrechnungsverhältnis in einem Fall, dass das Verhältnis der dritten Kraftstoffverbrauchsmenge zur dritten Elektrizitätsverbrauchsmenge größer ist als das Umrechnungsverhältnis;
Erfassen des angepassten Umrechnungsverhältnisses durch Reduzieren des Umrechnungsverhältnisses um ein drittes Verhältnis in einem Fall, dass das Verhältnis der dritten Kraftstoffverbrauchsmenge zur dritten Elektrizitätsverbrauchsmenge kleiner als das Umrechnungsverhältnis ist; oder
Bestimmen eines Produkts aus dem Umrechnungsverhältnis und einem vierten Verhältnis als das angepasste Umrechnungsverhältnis in einem Fall, dass das Verhältnis der dritten Kraftstoffverbrauchsmenge zur dritten Elektrizitätsverbrauchsmenge kleiner als das Umrechnungsverhältnis ist.

6. Verfahren nach Anspruch 1, wobei
in einem Fall, dass die erste Elektrizitätsverbrauchsmenge negativ ist, eine vierte Kraftstoffverbrauchsmenge in der ersten Kraftstoffverbrauchsmenge in die erste Elektrizitätsverbrauchsmenge umgerechnet wird, wobei die vierte Kraftstoffverbrauchsmenge kleiner ist als die erste Kraftstoffverbrauchsmenge; oder
in einem Fall, dass die erste Elektrizitätsverbrauchsmenge positiv ist, die erste Elektrizitätsverbrauchsmenge zum Antreiben des Hybrid-Elektrofahrzeugs verwendet wird.

7. Einrichtung zum Bestimmen einer verfügbaren Reichweite, umfassend:
ein Erfassungsmodul (301), das ausgebildet ist, um eine verbleibende Kraftstoffmenge in einem Hybrid-Elektrofahrzeug und eine erste Kraftstoffverbrauchsmenge pro Einheitsabstand und eine erste Elektrizitätsverbrauchsmenge pro Einheitsabstand zu erfassen;
ein Bestimmungsmodul (302), das ausgebildet ist, um ein Produkt aus der ersten Elektrizitätsverbrauchsmenge und einem Umrechnungsverhältnis als eine erste äquivalente Verbrauchsmenge zu bestimmen, wobei das Umrechnungsverhältnis ein Verhältnis der Kraftstoffverbrauchsmenge zu der Elektrizitätsverbrauchsmenge pro Einheitsabstand in einem Verlaufsfahrprozess des Hybrid-Elektrofahrzeugs ist, und sich die erste äquivalente Verbrauchsmenge auf eine aus der ersten Elektrizitätsverbrauchsmenge umgerechnete Kraftstoffverbrauchsmenge bezieht; und
das Bestimmungsmodul (302) weiter ausgebildet ist, um die verfügbare Reichweite der verbleibenden Kraftstoffmenge im Hybrid-Elektrofahrzeug basierend auf der verbleibenden Kraftstoffmenge, der ersten Kraftstoffverbrauchsmenge und der ersten äquivalenten Verbrauchsmenge zu bestimmen;
wobei das Bestimmungsmodul (302) weiter ausgebildet ist zum:
Bestimmen einer Summe aus der ersten Kraftstoffverbrauchsmenge und der ersten äquivalenten Verbrauchsmenge als eine durchschnittliche Kraftstoffverbrauchsmenge pro Einheitsabstand;
Erfassen eines Verhältnisses der verbleibenden Kraftstoffmenge zur durchschnittlichen Kraftstoffverbrauchsmenge, wobei das Verhältnis eine Anzahl von Einheitsabständen angibt, die der verbleibenden Kraftstoffmenge entsprechen; und
Bestimmen eines Produkts aus dem Verhältnis und dem Einheitsabstand als die verfügbare Reichweite der verbleibenden Kraftstoffmenge;
**dadurch gekennzeichnet, dass** das Bestimmungsmodul (302) weiter ausgebildet ist zum:
Bestimmen eines Verhältnisses aus der verbleibenden Kraftstoffmenge zu einem ersten Verbrauchsmengengrenzwert als die verfügbare Reichweite der verbleibenden Kraftstoffmenge, in einem Fall, dass die durchschnittliche Kraftstoffverbrauchsmenge kleiner als der erste Verbrauchsmengengrenzwert ist; oder
Bestimmen eines Verhältnisses der verbleibenden Kraftstoffmenge zu einem zweiten Verbrauchsmengengrenzwert als die verfügbare Reichweite der verbleibenden Kraftstoffmenge, in einem Fall, dass der durchschnittliche Kraftstoffverbrauch größer als der zweite Verbrauchsmengengrenzwert ist;
wobei der erste Verbrauchsmengengrenzwert geringer ist als der zweite Verbrauchsmengengrenzwert.

8. Hybrid-Elektrofahrzeug (500), umfassend: einen Prozessor (501) und einen Speicher (502), der einen oder mehrere Programmcodes speichert, wobei der Prozessor (502), wenn die einen oder mehrere Programmcodes geladen und ausgeführt werden, veranlasst wird, das Verfahren zum Bestimmen der verfügbaren Reichweite, wie definiert in einem der Ansprüche 1 bis 6, durchzuführen.

9. Computerlesbares Speichermedium, das einen oder mehrere Programmcodes speichert, wobei der einen oder die mehrere Programmcodes, wenn von einem Prozessor geladen und ausgeführt, den Prozessor veranlassen, das Verfahren zum Bestimmen der verfügbaren Reichweite, wie definiert in einem der Ansprüche 1 bis 6, durchzuführen.

## Revendications

1. Procédé de détermination d'une autonomie disponible, applicable à un véhicule électrique hybride, le procédé comprenant :
l'acquisition (101, 203) d'une quantité de carburant résiduel dans le véhicule électrique hybride, et d'une première quantité de consommation de carburant par unité de distance et d'une première quantité de consommation d'électricité par unité de distance ;
la détermination (102, 204) d'un produit de la première quantité de consommation d'électricité et d'un rapport de conversion en tant que première quantité de consommation équivalente, dans lequel le rapport de conversion est un rapport d'une quantité de consommation de carburant à une quantité de consommation d'électricité par unité de distance dans un processus de conduite historique du véhicule électrique hybride, et la première quantité de consommation équivalente fait référence à une quantité de consommation de carburant convertie à partir de la première quantité de consommation d'électricité ; et
la détermination (103) de l'autonomie disponible de la quantité de carburant résiduel dans le véhicule électrique hybride sur la base de la quantité de carburant résiduel, de la première quantité de consommation de carburant et de la première quantité de consommation équivalente ;
dans lequel la détermination (103) de l'autonomie disponible de la quantité de carburant résiduel dans le véhicule électrique hybride sur la base de la quantité de carburant résiduel, de la première quantité de consommation de carburant et de la première quantité de consommation équivalente comprend :
la détermination (205) d'une somme de la première quantité de consommation de carburant et de la première quantité de consommation équivalente en tant que quantité de consommation de carburant moyenne par unité de distance ;
l'acquisition (206) d'un rapport de la quantité de carburant résiduel à la quantité de consommation de carburant moyenne, dans lequel le rapport indique une quantité d'unités de distance correspondant à la quantité de carburant résiduel ; et
la détermination (207) d'un produit du rapport et de l'unité de distance en tant qu'autonomie disponible de la quantité de carburant résiduel ;
**caractérisé en ce que** le procédé comprend en outre :
la détermination d'un rapport de la quantité de carburant résiduel à un premier seuil de quantité de consommation en tant qu'autonomie disponible de la quantité de carburant résiduel dans un cas où la quantité de consommation de carburant moyenne est inférieure au premier seuil de quantité de consommation ; ou
la détermination d'un rapport de la quantité de carburant résiduel à un deuxième seuil de quantité de consommation en tant qu'autonomie disponible de la quantité de carburant résiduel dans un cas où la quantité de consommation de carburant moyenne est supérieure au deuxième seuil de quantité de consommation ;
dans lequel le premier seuil de quantité de consommation est inférieur au deuxième seuil de quantité de consommation.

2. Procédé selon la revendication 1, comprenant en outre :
l'acquisition (201) d'une deuxième quantité de consommation d'électricité par unité de distance dans un cas où le véhicule électrique hybride est entraîné par de l'énergie électrique et d'une deuxième quantité de consommation de carburant par unité de distance dans un cas où le véhicule électrique hybride est entraîné par du carburant ; et
la détermination (202) d'un rapport de la deuxième quantité de consommation de carburant à la deuxième quantité de consommation d'électricité en tant que rapport de conversion.

3. Procédé selon la revendication 2, dans lequel
un processus de détermination du rapport de la deuxième quantité de consommation de carburant à la deuxième quantité de consommation d'électricité en tant que rapport de conversion est effectué à chaque intervalle de temps prédéterminé, et
l'acquisition (201) de la deuxième quantité de consommation d'électricité dans le cas où le véhicule électrique hybride est entraîné par de l'énergie électrique et de la deuxième quantité de consommation de carburant dans le cas où le véhicule électrique hybride est entraîné par du carburant comprend :
l'acquisition de la deuxième quantité de consommation d'électricité dans le cas où le véhicule électrique hybride est entraîné par de l'énergie électrique et de la deuxième quantité de consommation de carburant dans le cas où le véhicule électrique hybride est entraîné par du carburant à chaque intervalle de temps prédéterminé.

4. Procédé selon la revendication 2, comprenant en outre :
l'acquisition d'une troisième quantité de consommation d'électricité et d'une troisième quantité de consommation de carburant consommée par une distance cible du véhicule électrique hybride, dans lequel la troisième quantité de consommation d'électricité est une quantité d'électricité consommée dans le cas où le véhicule électrique hybride est entraîné par de l'énergie électrique, et la troisième quantité de consommation de carburant est une quantité de carburant consommée dans le cas où le véhicule électrique hybride est entraîné par du carburant ; et
l'acquisition d'un rapport de conversion ajusté en ajustant le rapport de conversion sur la base d'un rapport de la troisième quantité de consommation de carburant à la troisième quantité de consommation d'électricité et au rapport de conversion.

5. Procédé selon la revendication 4, dans lequel l'acquisition du rapport de conversion ajusté en ajustant le rapport de conversion sur la base du rapport de la troisième quantité de consommation de carburant à la troisième quantité de consommation d'électricité et au rapport de conversion comprend :
l'acquisition du rapport de conversion ajusté en augmentant le rapport de conversion d'un premier rapport dans un cas où le rapport de la troisième quantité de consommation de carburant à la troisième quantité de consommation d'électricité est supérieur au rapport de conversion ;
la détermination d'un produit du rapport de conversion et d'un deuxième rapport en tant que rapport de conversion ajusté dans un cas où le rapport de la troisième quantité de consommation de carburant à la troisième quantité de consommation d'électricité est supérieur au rapport de conversion ;
l'acquisition du rapport de conversion ajusté en réduisant le rapport de conversion d'un troisième rapport dans un cas où le rapport de la troisième quantité de consommation de carburant à la troisième quantité de consommation d'électricité est inférieur au rapport de conversion ; ou
la détermination d'un produit du rapport de conversion et d'un quatrième rapport en tant que rapport de conversion ajusté dans un cas où le rapport de la troisième quantité de consommation de carburant à la troisième quantité de consommation d'électricité est inférieur au rapport de conversion.

6. Procédé selon la revendication 1, dans lequel
dans un cas où la première quantité de consommation d'électricité est négative, une quatrième quantité de consommation de carburant dans la première quantité de consommation de carburant est convertie en la première quantité de consommation d'électricité, dans lequel la quatrième quantité de consommation de carburant est inférieure à la première quantité de consommation de carburant ; ou
dans un cas où la première quantité de consommation d'électricité est positive, la première quantité de consommation d'électricité est utilisée pour entraîner le véhicule électrique hybride.

7. Appareil de détermination d'une autonomie disponible, comprenant :
un module d'acquisition (301), configuré pour acquérir une quantité de carburant résiduel dans un véhicule électrique hybride, et une première quantité de consommation de carburant par unité de distance et une première quantité de consommation d'électricité par unité de distance ;
un module de détermination (302), configuré pour déterminer un produit de la première quantité de consommation d'électricité et un rapport de conversion en tant que première quantité de consommation équivalente, dans lequel
le rapport de conversion est un rapport d'une quantité de consommation de carburant à une quantité de consommation d'électricité par unité de distance dans un processus de conduite historique du véhicule électrique hybride, et
la première quantité de consommation équivalente fait référence à une quantité de consommation de carburant convertie à partir de la première quantité de consommation d'électricité ; et
le module de détermination (302), configuré en outre pour déterminer l'autonomie disponible de la quantité de carburant résiduel dans le véhicule électrique hybride sur la base de la quantité de carburant résiduel, de la première quantité de consommation de carburant et de la première quantité de consommation équivalente ;
le module de détermination (302), configuré en outre pour :
déterminer une somme de la première quantité de consommation de carburant et de la première quantité de consommation équivalente en tant que quantité de consommation de carburant moyenne par unité de distance ;
acquérir un rapport de la quantité de carburant résiduel à la quantité de consommation de carburant moyenne, dans lequel le rapport indique une quantité d'unités de distance correspondant à la quantité de carburant résiduel ; et
déterminer un produit du rapport et de l'unité de distance en tant qu'autonomie disponible de la quantité de carburant résiduel ;
**caractérisé en ce que** le module de détermination (302) est en outre configuré pour :
déterminer un rapport entre la quantité de carburant résiduel et un premier seuil de quantité de consommation comme l'autonomie disponible de la quantité de carburant résiduel dans un cas où la quantité de consommation de carburant moyenne est inférieure au premier seuil de quantité de consommation ; ou
déterminer un rapport de la quantité de carburant résiduel à un deuxième seuil de quantité de consommation en tant qu'autonomie disponible de la quantité de carburant résiduel dans un cas où la quantité de consommation de carburant moyenne est supérieure au deuxième seuil de quantité de consommation ;
dans lequel le premier seuil de quantité de consommation est inférieur au deuxième seuil de quantité de consommation.

8. Véhicule électrique hybride (500), comprenant : un processeur (501) et une mémoire (502) stockant un ou plusieurs codes de programme, dans lequel le processeur (502), lors du chargement et de l'exécution des un ou plusieurs codes de programme, est amené à effectuer le procédé de détermination de l'autonomie disponible tel que défini dans l'une quelconque des revendications 1 à 6.

9. Support de stockage lisible par ordinateur, stockant un ou plusieurs codes de programme, dans lequel les un ou plusieurs codes de programme, lorsqu'ils sont chargés et exécutés par un processeur, amènent le processeur à effectuer le procédé de détermination de l'autonomie disponible tel que défini dans l'une quelconque des revendications 1 à 6.
